# EUROPEAN PATENT APPLICATION

(11) **EP 0 664 315 A1**
(43) Date of publication of application: **26.07.1995**
(21) Application number: 95300307.6
(22) Date of filing: 18.01.1995
(51) Int. Cl.: C08K 5/00, C08K 5/54

(54) **Polyolefin composition of improved ductility and article therefrom**

(30) Priority: 24.01.1994 US 185086
(71) Applicant: Becton Dickinson and Company, Franklin Lakes, New Jersey 07417-1880 (US)
(72) Inventor: Williams, Joel L., Cary, North Carolina 27511 (US); Chu, Chia-Hsi, New Jersey 07675 (US); McGuire, Shel, Omaha, Nebraska 68134 (US)
(74) Representative: Ruffles, Graham Keith

(57) **Abstract**

A polyolefin composition includes a mobilizing oil and radiation stabilizing polysiloxane ether of a hindered piperidine. The composition and articles made from the composition have exceptional ductility before and after sterilization by ionizing radiation.

## Description

### BACKGROUND OF THE INVENTION

### 1. Field of the Invention.

The present invention relates to polymeric articles and more particularly relates to polymeric compositions of high resistance to fracture before and after sterilization by ionizing radiation and articles made therefrom.

### 2. Background of the Invention.

Semicrystalline polymeric materials including polyolefins of which polypropylene is the most significant with respect to the present invention are often employed in producing medical articles. Syringes, tubing, flasks, and package films are exemplary of such medical articles. Such articles often include parts, such as flanges, tips, tubing walls and the like in which the polymer is very thin, often less than one mm. Thinly molded parts are particularly subject to fracture, often as a result of technician error, such as dropping, or through material failure resulting from insufficient ductility. Fracture, of course, becomes less and less likely as ductility increases.

Medical articles are often sterilized by ionizing radiation prior to use. It is well known that polymeric materials, if not properly stabilized, will discolor and become embrittled (i.e., lose ductility) as a result of sterilization by high energy radiation at levels above 0.1 megarad.

Further, after irradiation has been completed, post irradiative deterioration continues due to free radicals generated by the irradiation, which participate in branching chain reactions. Therefore, while degradation of the mechanical properties of these polymeric materials may not be obvious immediately after irradiation, they become more pronounced as time goes on. Thus, much effort has been expended toward agents or additives which would stabilize polymeric materials toward post irradiation degradation and provide clarity to molded articles. Among the additives which have been included in polyolefin compositions to improve radiation stability and clarity are hindered piperidines, sorbitol derivatives and noncrystalline oils which increase the free volume (i.e., the volume of the composition not occupied by molecules).

While the above additives have improved polyolefin compositions intended for radiation sterilization, there is a need for still better compositions, particularly for compositions having physical properties which resist fracture of thinly molded parts. The present invention fulfills this need.

### SUMMARY OF THE INVENTION

One aspect of the present invention is a polymeric composition of high ductility. The composition may be radiation sterilized without any significant degradation of its mechanical properties, including its enhanced ductility. The composition includes a polyolefin having a narrow molecular weight distribution, a liquid mobilizing additive miscible with the polyolefin which increases the free volume of the polyolefin, a radiation stabilizing amount of a polysiloxane ether of a hindered amine, and may also include a dibenzylidene sorbitol clarifying agent.

The polyolefin may be a homopolymer or a copolymer of preferably polypropylene having a ratio of the weight average molecular weight to the number average molecular weight of no greater than 9, preferably about 2 to 4. The preferred mobilizer has a density of about 0.6 to 1.9 and most preferably is a hydrocarbon oil or a phthalic ester.

A second aspect of the invention is an article, preferably a sterilized medical article, fabricated from the composition of the invention.

Thus the invention provides a polyolefin composition and medical articles molded therefrom which includes a particular radiation stabilizer which unexpectedly enhances the ductility of the composition so that articles molded from the composition are significantly less likely to undergo fracture, either prior to or subsequent to ionizing radiation.

### DESCRIPTION OF THE DRAWINGS

Fig 1 compares the ductility of the preferred composition of the invention with the closest prior art polyolefin composition; and
Fig 2 compares the same compositions after sterilization with ionizing radiation.

### DETAILED DESCRIPTION

While this invention is satisfied by embodiments in many different forms, there will herein be described in detail preferred embodiments of the invention, with the understanding that the present disclosure is to be considered as exemplary of the principles of the invention and is not intended to limit the invention to the embodiments illustrated and described. The scope of the invention will be measured by the appended claims and their equivalents.

The polyolefin of the present invention may be described as basically linear, but may optionally contain side chains such as are found, for instance, in conventional, low density polyethylene. It may be a homopolymer or a copolymer of an aliphatic monoolefin, preferably having about 2 to 6 carbon atoms. Exemplary of such polyolefins are polyethylene, polymethylpentene, polytetrafluoroethylene and the like. The preferred polyolefin is polypropylene or a copolymer of polyethylene and polypropylene.

The polyolefin may contain a small amount, generally from about 0.1 to 10 percent of an additional polymer incorporated into the composition by copolymerization with the appropriate monomer. Such copolymers may be added to the composition to enhance other characteristics of the final composition, and may be, for example, polyacrylate, polyvinyl, polystyrene and the like.

It is preferred that the polyolefin of the composition be of narrow molecular weight distribution. The molecular weight distribution of a polymer is defined by the ratio of the weight average molecular weight (Mw) and the number average molecular weight (Mn) wherein the minimum possible ratio of 1.0 defines a polymer having all the chains the same size. Suitable polyolefins for the composition of the invention may have a number average molecular weight of about 10,000 to 400,000, preferably 30,000 to 80,000 and a ratio of from 1 to 9 preferably 2 to 6 as determined by conventional gel permeation chromatography. Most preferably the ratio is 2 to 4.

In addition to being of narrow molecular weight distribution, the polyolefin of the invention is preferably semicrystalline. Preferred polyolefins have a crystalline content of about 20 to 90, preferably about 40 to 80, most preferably about 45 to 65 percent. The degree of crystallinity is linearly proportional to the density of the sample and, as known in the art, may be measured with a conventional density gradient column.

The composition of the invention includes at least two additives which contribute to radiation stability. The first stabilizing additive, hereinafter additive A, is a mobilizing additive. The mobilizer may be a low molecular weight noncrystalline substance which is miscible with the polymeric material and is also compatible therewith, i.e.,. the mobilizer does not adversely affect the properties of the polymer. The mobilizer may be a substance which increases the free volume of the polymer and, therefore, also lowers the density of the polymer portion of the polymer, and as a result, increases the radical termination reactions which prevent or minimize degradation during and subsequent to the radiation.

A wide variety of liquids which increase the total free volume of the polymer may serve as mobilizer. The term liquid as used herein includes highly viscous substances, commonly referred to as greases. In general, such mobilizers have a density of from 0.6 to 1.9g/cm³, preferably from 0.6 to 1.1g/cm³. The mobilizer preferably has a low molecular weight, with the average molecular weight generally being in order of from 100 to 10,000, most preferably from 100 to 5,000.

Representative examples of suitable mobilizers are hydrocarbon oils, halogenated hydrocarbon oils, phthalic ester oils, vegetable oils, silicone oils, low molecular weight non-crystalline polymer greases, such as hydrocarbon polymer greases, low molecular weight polyester greases, polyarylether greases, etc. It is to be understood that the above examples are only illustrative and the use of other mobilizers should be apparent to one skilled in the art from the teaching herein. The preferred mobilizer is a liquid which is not highly viscous, most preferably a hydrocarbon oil or a phthalic ester oil.

The mobilizing additive may be incorporated into the composition in a mobilizing amount, generally about 0.1 to 50, preferably about 1 to 20 percent by weight.

The second radiation stabilizing additive, herein after additive B, may be a hindered amine-polysiloxane ether of the following general structure: 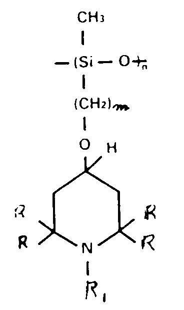
wherein R may be lower alkyl of 1 to 6 carbon atoms, R₁ may be H or lower alkyl of 1 to 6 carbon atoms, m may be 2 to 4 and n may be an integer sufficient to give the additive a molecular weight of about 1000-3000.

These products may be readily synthesized, for example, by reacting appropriately substituted 4-hydroxy-piperidines with hydroxyalkyl polysiloxanes, available from Petrarch, under conventional synthesis procedures.

In the preferred additive, commercially available from EniChem Synthesis SpA, Milano, Italy, under the trade name UVASIL™ 299, R is methyl, R₁ is H, m is 3 and n has a value such that the additive has an average molecular weight of about 1100-2500.

About 0.01 to 5.0, preferably about 0.05 to 3.0 percent by weight of additive B maybe used.

In accordance with the invention, it has been found that polypropylene compositions which include additive B as a light stabilizer show physical properties substantially better than similar compositions which include conventional hindered amine light stabilizers of the TINUVIN™ class.

The clarifying additive, hereinafter additive C, of the present invention may be a dibenzylidene sorbitol of the following general structure: 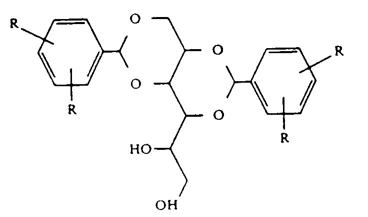
wherein R may be hydrogen, hydroxy, halogen, lower alkoxy, lower alkyl, lower alkylthio, lower alkylsulfoxy or phenylthio wherein the term lower with respect to alkyl or alkoxy is intended to be from 1 to 6 carbon atoms, branched or unbranched. The preferred additives have one or more lower alkyl groups in each ring, preferably methyl groups. The most preferred clarifier is the bis 2,4-dimethyl derivative.

Clarifying properties are conferred when the additive of the invention is formulated into the polyolefin composition in a quantity within the range of about 0.005 to 0.5, most preferably about 0.1 to 0.3 percent by weight. Dibenzylidene sorbitol clarifying agents for polyolefins are well known in the art and no further details with respect to this aspect of the invention are needed for a full understanding of the invention.

Clarity of a polyolefin composition is conventionally reported as the haze value. Haze values of the compositions of the invention may be determined by ASTM procedure D 1003.

Other additives as known in the art may be added to provide other desirable properties to the compositions. For example, fillers, coloring agents, antistatic materials, wetting agents, antiacids, and the like may be added in suitable quantities providing no deleterious effects in the desired physical properties, clarity or radiation stability are introduced. In addition, other known clarifying additives, as for example, organic acids and metal salts thereof, such as para-t-butylbenzoic acid , may be incorporated into the composition.

Preparation of the composition of the invention from its constituent parts is routine and may be carried out by any conventional mixing means. Generally, polyolefin pellets and the additives are thoroughly mixed by stirring or tumbling, the mixture melted and the melt pelletized and molded into the shape of the desired article. Representative nonlimiting medical articles which may be fabricated from the composition of the invention are syringes, catheters, tube assemblies, tissue culture flasks, and package films. It is, of course, evident that the composition may also be used to make non-medical articles.

Sterilization of the composition or article of the invention is effected by exposure to a sterilizing amount of high energy ionizing radiation, for example, electron beam irradiation and particularly gamma irradiation from a cobalt-60 source. A sterilizing amount generally comprises from about 0.5 to 10 megarads, a typical dose being in a range of from about 1.0 to 5.0 megarads preferably about 1.5 to 3.5 megarads. It is understood that higher doses could be employed but are generally not necessary. Sterilization by ionizing radiation does not cause any substantial discoloration of the articles or composition of the invention.

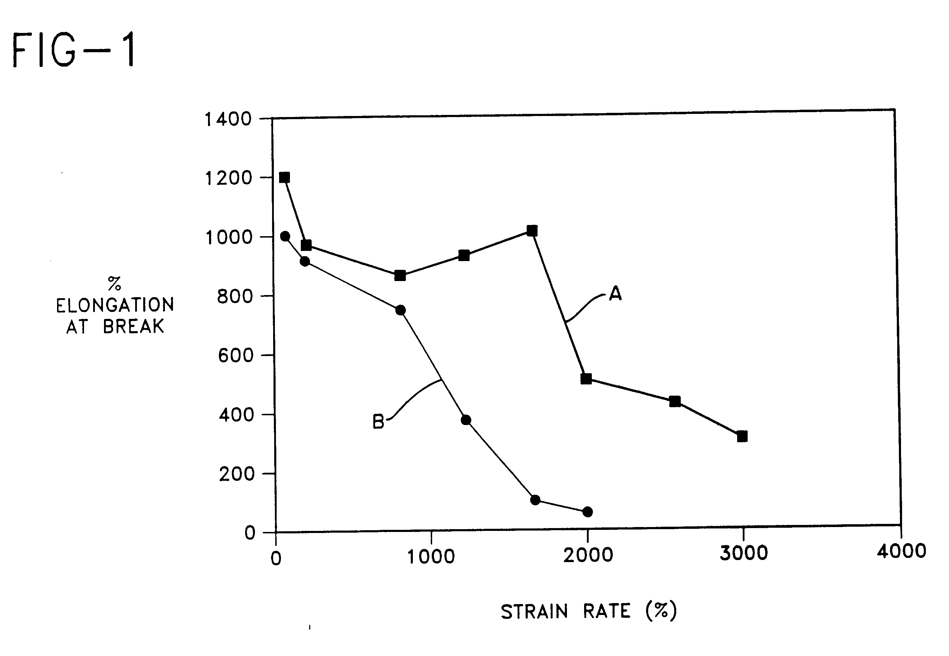

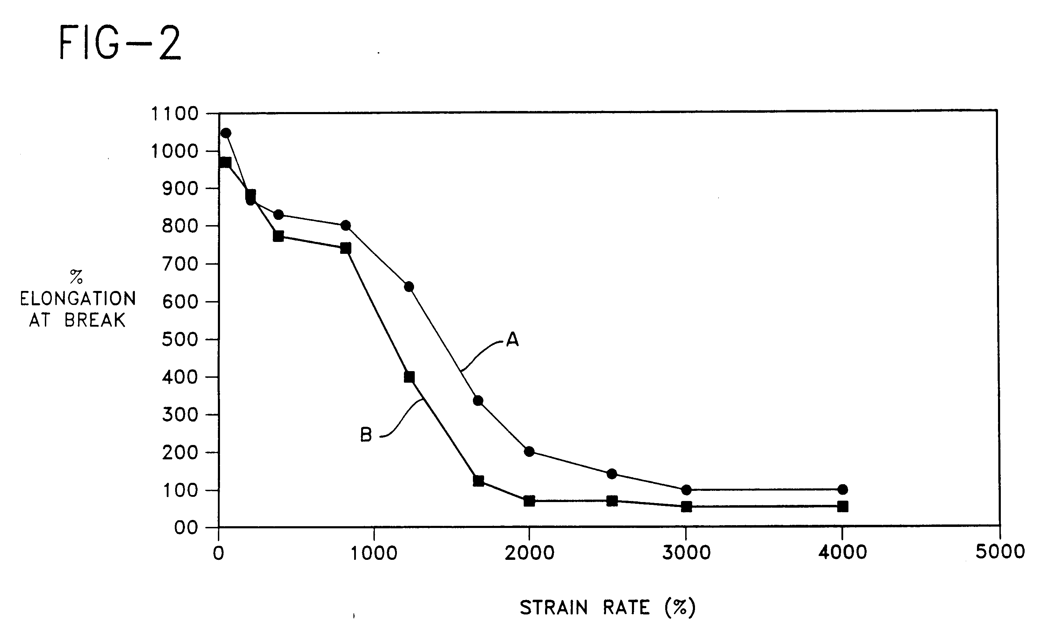

Plastic articles which have thin molded parts, such as syringe flanges and tips, must be resistant to fracture. Ductility is defined as the ability of a plastic material to be deformed by elongation without fracture wherein elongation is the ability of a polymer to stretch without breaking. Ductility was measured by determining the percent elongation at break of the polymer at various strain rates in accordance with ASTM D638 using an Instron Universal Testing Instrument Model 1122. Figs 1 and 2 illustrate this data before and after sterilization with ⁶⁰Co ionizing radiation respectively. It is seen from the figures that the step plaque of Example I (Curve A) is significantly more ductile than a step plaque of the prior art (Example II, curve B) which includes a conventional hindered amine radiation stabilizer, regardless of the rate of application of strain.

It is believed, but not yet substantiated, that the remarkable improvement in ductility disclosed herein is due to a high concentration of the liquid hindered amine-polysiloxane ether stabilizer in the composition of the invention compared with a much lower concentration of the crystalline and less soluble hindered piperidine in the composition of the prior art.

### EXAMPLE I

Preparation of Compositions of the Invention

Semicrystalline polypropylene pellets having a narrow molecular weight distribution and a melt flow rate of 12 were shaken with 0.125 percent of bis(2,4-dimethylbenzylidene) sorbitol clarifying agent, 4.7 percent of mobilizing hydrocarbon oil, 0.1 percent sodium stearate (antiacid) and 0.1 percent of UVASIL™ 299 stabilizing agent to coat the pellets. The pellets were then extruded through a single screw extruder at 210°C, cooled and repelletized. The new pellets were then molded into step plaques 50X75 mm in overall dimension by injection molding. The upper step was 0.08 inches (2mm) thick while the lower step was 0.04 inches (1mm) thick.

### EXAMPLE II (COMPARATIVE)

Step plaques were prepared as described in Example I except the hindered amine stabilizing agent was TINUVIN™ 770 (bis(2,2,6,6-tetramethyl-4-piperdinyl) sebacate, Ciba Giegy Corp.)

The haze data for this prior art composition and the composition of the invention of Example I is given below.

| | 40 mil | 80 mil |
|---|---|---|
| INVENTION | 11.3 | 38.0 |
| PRIOR ART | 10.0 | 36.3 |

## Claims

1. A composition comprising a semicrystalline polyolefin having a weight distribution wherein the ratio of the weight average molecular weight to the number average molecular weight is no greater than 9, and a liquid mobilizing oil compatible with said polyolefin having a density of about 0.6 to 1.9 grams per cubic centimeter, and a radiation stabilizer selected from the group having the structure 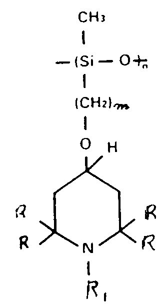 wherein R is lower alkyl of 1 to 6 carbon atoms, R₁ is H or lower alkyl of 1 to 6 carbon atoms, m is 2 to 4 and n is an integer sufficient to give the additive a molecular weight of about 1000-3000.

2. A composition comprising a polyolefin having a crystalline content of about 20-90 percent and a weight distribution wherein the ratio of the weight average molecular weight to the number average molecular weight is no greater than 9, a liquid mobilizing oil compatible with said polyolefin having a density of about 0.6 to 1.9 grams per cubic centimeter, and a radiation stabilizer selected from the group having the structure 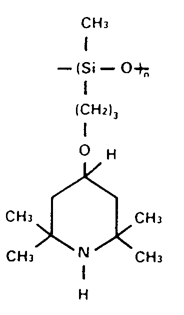 wherein n is an integer sufficient to give said stabilizer a molecular weight of about 1100 to 2500.

3. The composition of Claim 2 wherein said polyolefin is selected from the group consisting of polyethylene, polypropylene, polymethylpentene, and copolymers thereof.

4. The composition of Claim 2 wherein said mobilizing oil is selected from the group consisting of a hydrocarbon oil, phthalic ester, polymer grease, vegetable oil and silicone oil.

5. The composition of Claim 2 further comprising a dibenzylidene sorbitol clarifier.

6. A composition comprising polypropylene having a crystalline content of 30 to 70 percent and a weight distribution wherein the ratio of the weight average molecular weight to the number average molecular weight is about 2 to 4, a mobilizing amount of a substantially nonviscous liquid mobilizer selected from the group consisting of a hydrocarbon oil and a phthalic ester oil, a clarifying amount of 2,4,2',4'-tetramethyl-dibenzylidene sorbitol and a radiation sterilizing amount of a stabilizer having the structure 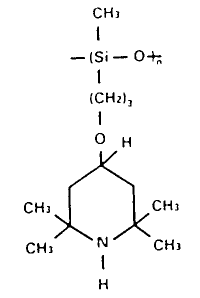 wherein n is an integer sufficient to give said stabilizer a molecular weight of about 1100 to 2500.

7. A medical article comprising the composition of Claim 2.

8. The article of Claim 7 which has been sterilized by ionizing radiation.

9. A medical article comprising the composition of Claim 6.

10. The article of Claim 9 which has been sterilized by ionizing radiation.
